# FASCICULE DE BREVET EUROPEEN

(11) **EP 4 263 742 B1**
(45) Date de publication et mention de la délivrance du brevet: **02.10.2024**
(21) Numéro de dépôt: 21840090.1
(22) Date de dépôt: 07.12.2021
(51) Int. Cl.: C09J 175/04, C08G 18/66, C08G 18/76, C08G 18/78, C08G 18/80, C08K 5/00, C08L 75/02, C08L 75/04, C09J 175/02

(54) **ADHESIF STRUCTURAL POLYURETHANE BICOMPOSANT A PROPRIETES AMELIOREES**
ZWEIKOMPONENTEN-POLYURETHAN-STRUKTURKLEBSTOFF MIT VERBESSERTEN EIGENSCHAFTEN
TWO-COMPONENT POLYURETHANE STRUCTURAL ADHESIVE WITH IMPROVED PROPERTIES

(30) Priorité: 16.12.2020 FR 2013362
(43) Date de publication de la demande: 25.10.2023
(73) Titulaire: Bostik SA, 92700 Colombes (FR)
(72) Inventeur: SANZ, Federico, 60280 VENETTE (FR); MULLER-SELLAK, Saida, 60280 VENETTE (FR)
(74) Mandataire: Arkema Patent
(86) Numéro de dépôt international: PCT/FR2021/052223
(87) Numéro de publication internationale: WO 2022/129731

(56) Documents cités:
- WO-A1-2019/193279
- WO-A1-99/55755
- FR-A1- 3 064 003

## Description

### DOMAINE DE L'INVENTION

La présente invention a pour objet une composition adhésive structurale polyuréthane bicomposante (PU2K) présentant des propriétés améliorées relatives à la coulure et à la dissipation thermique. Elle concerne également l'utilisation de ladite composition.

### ARRIERE-PLAN TECHNOLOGIQUE

Les adhésifs structuraux sont bien connus pour la réalisation d'assemblages, par collage de substrats les plus divers (par exemple de substrats métalliques), qui peuvent supporter des contraintes aussi importantes que les assemblages qui sont obtenus par des moyens mécaniques, par exemple par vis ou par soudure. Le joint adhésif liant les deux substrats dans de tels assemblages permet de résister à des contraintes mécaniques de traction très élevées, par exemple supérieures à 7 MPa, de préférence supérieures à 20 MPa.

De telles performances mécaniques pour le joint adhésif peuvent être obtenues par des compositions adhésives structurales polyuréthane bi composantes.

Ces dernières compositions se présentent sous la forme de deux compositions (ou composants):
- l'un (appelé composant -NCO) contenant les entités chimiques porteuses de groupements terminaux isocyanates -NCO ; et
- l'autre (appelé composant durcisseur) contenant des entités chimiques porteuses d'un groupement réactif avec le groupement -NCO, par exemple porteuses d'un groupement terminal hydroxyl ou amino.

Ces 2 composants sont souvent, pour leur mise en oeuvre, conditionnés séparément dans les 2 compartiments d'une bicartouche. La distribution de la composition adhésive se fait ainsi, au moment de l'application sur les substrats à assembler, par extrusion des 2 composants, par exemple à l'aide d'un pistolet pour bicartouche, et à leur mélange homogène obtenu, par exemple, par la fixation d'un mélangeur statique à la bicartouche. La réaction des groupes réactifs -NCO avec, par exemple, les groupements -OH (appelée réaction de réticulation) qui se produit à partir du mélange des 2 composants, a alors pour effet la création d'un réseau polymérique tridimensionnel solide, qui confère au joint adhésif créé entre les substrats à assembler les propriétés mécaniques souhaitées.

Parmi les propriétés de mise en oeuvre requises pour une composition adhésive structurale polyuréthane bi composante, il en est une qui présente une grande importance en pratique, relative à son comportement anti-coulure.

En effet, la colle directement issue du mélange du composant -NCO et du composant durcisseur est déposée (manuellement par un opérateur ou par un dispositif automatique) sur une première surface bien délimitée d'un 1^{er} substrat, sous la forme d'un cordon dont le diamètre peut aller jusqu'à 2 cm. Cette surface ainsi encollée est ensuite mise en contact avec la seconde surface bien délimitée d'un 2^{ème} substrat, après un certain laps de temps variable selon le temps ouvert de la colle.

Or, il peut arriver que, soit la 1^{ère} surface sur laquelle est déposée initialement le cordon de colle, soit les 2 substrats juste après leur mise en contact, soient en position non horizontale, notamment verticale, alors même que la réticulation de la colle n'est pas achevée. Ceci a pour effet d'exposer le (ou les) cordon de la colle non encore réticulée à la force de gravité et par conséquent à un risque de déformation ou de fluage ou même de coulure (également qualifié en langue anglaise par "sagging" ou "slump"), sous l'action de la contrainte résultant de ladite force.

Un tel changement de forme du cordon est désigné dans la suite du présent texte par le terme général de " coulure". Il peut ainsi avoir pour conséquence une variation de l'épaisseur de la colle en cours de réticulation entre les 2 substrats, et donc une inhomogénéité, notamment dimensionnelle, du joint adhésif qui lie solidement les 2 substrats dans l'assemblage final obtenu après réticulation complète.

Cette inhomogénéité du joint adhésif est particulièrement susceptible d'affecter ses propriétés mécaniques, tout particulièrement pour un joint adhésif devant résister aux contraintes mécaniques très élevées attendues pour un adhésif structural.

Il est donc particulièrement souhaitable de limiter la coulure pour une composition adhésive structurale polyuréthane bi composante, et même de la supprimer, dans les conditions de sa mise en oeuvre.

La demande FR 3063915 de Bostik décrit un agent anti-coulure constitué d'une diurée obtenue par réaction d'un diisocyanate aromatique avec une amine aliphatique, sous la forme d'une suspension de particules solides de ladite diurée, dans un plastifiant spécifique en tant que phase continue. Cette demande décrit également une composition adhésive de mastic mono composant à base de prépolymère polyuréthane à groupes terminaux -NCO qui comprend de 5 à 25 % en poids dudit agent. Toutefois, les propriétés de résistance à la traction du joint adhésif obtenu par réticulation de ladite composition à l'humidité atmosphérique ne sont pas adaptées à la résistance aux contraintes susceptibles de s'appliquer à un adhésif structural, par exemple à des contraintes mécaniques de traction supérieures à 7 MPa. De plus, la vitesse de réticulation d'un adhésif polyuréthane mono composant est généralement beaucoup plus lente que celle d'un PU2K.

La demande FR 3079840 de Bostik décrit une composition adhésive structurale polyuréthane bicomposante spécifique, dont le composant -NCO a une teneur pondérale en monomère diisocyanate, potentiellement dangereux pour la manipulation et la santé des utilisateurs, qui est inférieure ou égale à 0,1 %. Le composant -NCO et le composant durcisseur de cette composition comprennent chacun un agent de rhéologie constitué d'une cire d'amide micronisée WO2019/193279 A1 décrit une composition adhésive de polyuréthane bicomposante comprenant un agent de rhéologie.

Il est cependant toujours très souhaitable de proposer d'autres compositions adhésives structurales polyuréthanes bicomposantes qui, tout en permettant de limiter ou même de supprimer la coulure durant leur mise en oeuvre, présentent d'autres propriétés améliorées concernant le joint adhésif réticulé, importantes dans la pratique.

Ainsi, les adhésifs structuraux de type PU2K sont de plus en plus utilisés dans le domaine du transport, par exemple pour assembler des éléments de batteries destinées aux voitures électriques ou aux voitures hybrides, ou encore pour assembler des pièces métalliques au voisinage d'un moteur thermique. S'agissant ainsi d'une batterie dont la recharge s'accompagne d'une augmentation de température, il est important de limiter autant que possible ladite augmentation, qui est susceptible de dégrader certains circuits électroniques ou encore de diminuer la durée de vie de la batterie. Pour ce faire, toute amélioration de la dissipation thermique des éléments constitutifs de ladite batterie est importante, et notamment la dissipation thermique des joints adhésifs mis en oeuvre pour assembler lesdits éléments.

Il existe par conséquent un besoin d'améliorer la dissipation thermique du joint adhésif inclus dans les assemblages concernés.

La présente invention a ainsi pour but de proposer une composition adhésive structurale polyuréthane bicomposante qui permette de résoudre le double problème :
- d'amélioration de la dissipation thermique du joint adhésif obtenu par réaction du composant-NCO avec le composant durcisseur, et
- de résistance à la coulure, lors de son application sur la surface des substrats à assembler.

Un autre but de la présente invention est de proposer une composition adhésive structurale polyuréthane bicomposante, susceptible de former, après réaction de réticulation entre ses 2 composants, un joint adhésif qui présente une contrainte à la rupture en traction supérieure à 10 MPa, de préférence supérieure à 20 MPa.

Un autre but de la présente invention est de proposer une composition adhésive structurale polyuréthane bicomposante, qui présente un comportement rhéologique adapté à l'extrusion de la colle par les dispositifs d'application tels qu'un pistolet à bicartouche et mélangeur statique.

Il a à présent été trouvé que ces buts peuvent être atteints, en totalité ou en partie, au moyen de la composition adhésive structurale polyuréthane bicomposante qui est décrite ci-après.

### DESCRIPTION DE L'INVENTION

La présente invention a donc pour objet en premier lieu une composition adhésive structurale polyuréthane bicomposante (PU2K) constituée d'un composant -NCO, qui contient une ou plusieurs entités chimiques porteuses de groupements terminaux isocyanates, et d'un composant durcisseur, qui contient au moins une entité chimique porteuse d'un groupement réactif avec le groupement isocyanate -NCO, caractérisée en ce que :
- le composant -NCO et le composant durcisseur comprennent chacun de 0,1 % à 40 % en poids, sur la base du poids total du composant correspondant, d'une composition thixotrope (A) comprenant, sur la base de son poids total :
   - de 1 à 40 % en poids d'une bis-urée (a) obtenue par réaction d'une amine aliphatique primaire (a1) avec un diisocyanate (a2) de masse molaire inférieure à 500 g/mole, et
   - de 60 à 99 % en poids d'un plastifiant (b) choisi parmi :
      - un alkylphtalate,
      - le tétravalérate de pentaérythritol,
      - un ester d'acide alkylsulphonique et de phénol,
      - le diisononyl-1,2-cyclohexane dicarboxylate,
      - le 3,3'-[Methylenebis(oxymethylene)]bis[heptane] ; et
      - le dioctyl carbonate ;
      ladite composition thixotrope (A) se présentant sous la forme d'une suspension (ou dispersion) de particules solides de la bis-urée (a) dans une phase continue constituée par le plastifiant (b) ; et
- au moins un composant, parmi le composant -NCO et le composant durcisseur, comprend de 5 à 40 % en poids d'alumine (B), sur la base du poids total dudit composant.

Il a été trouvé, par des essais réalisés par la société déposante, que l'incorporation de la composition thixotrope (A) dans chacun des composants -NCO et durcisseur, permet, combinée avec la présence d'alumine (B), de limiter, voire de supprimer l'effet indésirable de coulure de la composition adhésive structurale PU2K, au moment de la réalisation d'assemblages de substrats dont un au moins est en position non horizontale, notamment verticale. Un tel effet est de plus obtenu sans diminuer la cohésion du joint adhésif et son aptitude à résister à des contraintes très élevées, du niveau attendu pour un adhésif structural, et, de plus, en offrant une conductivité (ou conductibilité) thermique augmentée, correspondant à une dissipation thermique améliorée.

Un tel adhésif structural PU2K conserve également son aptitude à être extrudé au moyen d'un pistolet standard, adapté à la bicartouche munie d'un mélangeur statique, dans lequel il est conditionné, ce qui en fait ainsi globalement un produit très avantageux en pratique, dans tous les domaines industriels, tels que ceux du transport, où il existe un besoin d'amélioration de la dissipation thermique du joint adhésif, par exemple pour les assemblages de pièces métalliques destinées à la fabrication des batteries conçues pour les véhicules électriques ou hybrides.

### Composant -NCO :

Le composant -NCO contient une ou plusieurs entités chimiques porteuses de groupements terminaux isocyanates.

Selon un mode de réalisation, le composant -NCO comprend (un ou plusieurs) polyisocyanates, qui peut être aliphatique (linéaire, ramifié ou cyclique) ou aromatique, et éventuellement substitué.

De préférence, le polyisocyanate compris dans le composant -NCO est choisi parmi les diisocyanates, les triisocyanates, et leurs mélanges.

Selon un mode de réalisation préféré, les diisocyanates sont choisis dans le groupe constitué de : l'isophorone diisocyanate (IPDI), du pentaméthylène diisocyanate (PDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 4,4'-méthylènebis(cyclohexylisocyanate) (4,4'-HMDI), du norbomane diisocyanate, du norbomène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du 1,3-bis(isocyanatomethyl)cyclohexane (1,3-H6-XDI), du 1,4-bis(isocyanatomethyl)-cyclohexane (1,4-H6-XDI), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou du 2,4'-diphénylméthane diisocyanate (2,4'-MDI)), du tétraméthylxylylène diisocyanate (TMXDI) (en particulier le tétraméthyl (méta)xylylène diisocyanate), d'un allophanate de HDI ou de PDI ayant par exemple les formules (Y1) et (Y2) suivantes : 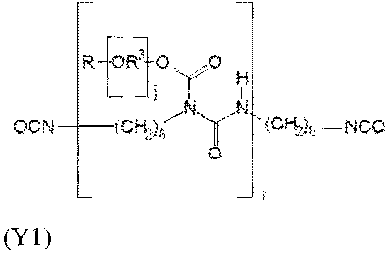 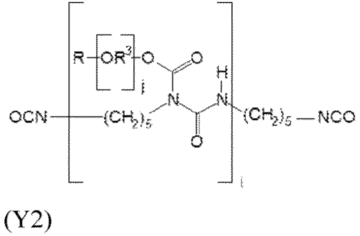 dans lesquelles :
- i est un nombre entier allant de 1 à 2,
- j est un nombre entier allant de 0 à 9, et de préférence 2 à 5,
- R représente une chaîne hydrocarbonée, saturée ou insaturée, cyclique ou acyclique, linéaire ou ramifiée, comprenant de 1 à 20 atomes de carbone, de préférence de 1 à 12 atomes de carbones, et plus préférentiellement de 6 à 14 atomes de carbone,
- R³ représente un groupe divalent alkylène, linéaire ou ramifié, ayant de 2 à 4 atomes de carbones, et de préférence un groupe divalent propylène ;
et de leurs mélanges.

Le MDI peut se présenter sous la forme d'un isomère ou d'un mélange d'isomères, tel que le 4,4'-MDI et/ou le 2,4'-MDI.

Le TDI peut se présenter sous la forme d'un isomère ou d'un mélange d'isomères, tel que le 2,4-TDI et/ou le 2,6-TDI.

Les diisocyanates utilisable(s) sont largement disponibles dans le commerce. A titre d'exemple, on peut citer le SCURANATE^{®} TX commercialisé par la société VENCOREX, correspondant à un 2,4-TDI de pureté de l'ordre de 95%, le SCURANATE^{®} T100 commercialisé par la société VENCOREX, correspondant à un 2,4-TDI de pureté supérieure à 99% en poids, le DESMODUR^{®} I commercialisé par la société COVESTRO, correspondant à un IPDI, ou encore l'ISONATE ^{®} M125 commercialisé par DOW, correspondant à un MDI contenant au moins 97 % de 4,4'-MDI.

Selon un autre mode de réalisation, les triisocyanates compris dans le composant - NCO peuvent être choisis parmi les isocyanurates de diisocyanate, les adduits de diisocyanates et de triols, et les biurets.

En particulier, les isocyanurates peuvent être utilisés sous la forme d'un mélange technique de (poly)isocyanurates de pureté supérieure ou égale à 70% en poids d'isocyanurates.

Les isocyanurates de diisocyanate utilisables selon l'invention peuvent répondre à la formule générale (W) suivante : 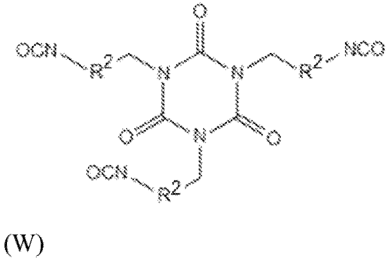
dans laquelle R² représente un groupe alkylène, linéaire ou ramifié, cyclique, aliphatique, arylaliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

A titre d'exemple d'isocyanurates de diisocyanate utilisables selon l'invention, on peut citer :
- l'isocyanurate d'hexaméthylène diisocyanate (HDI) : 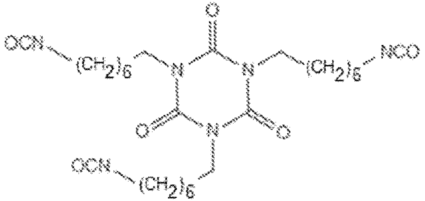
- l'isocyanurate d'isophorone diisocyanate (IPDI) : 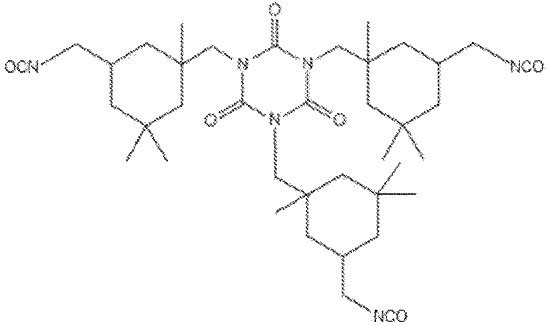
- l'isocyanurate de pentaméthylène diisocyanate (PDI) : 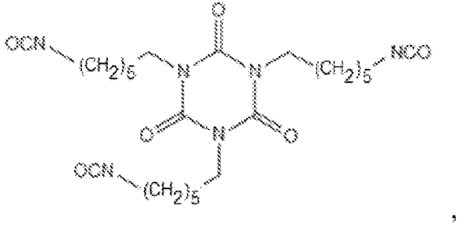
- l'isocyanurate du méta-xylylène diisocyanate (m-XDI) : 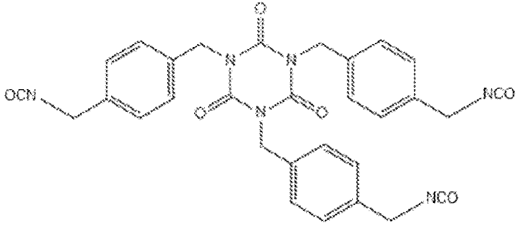
- l'isocyanurate du m-XDI, sous forme hydrogénée :

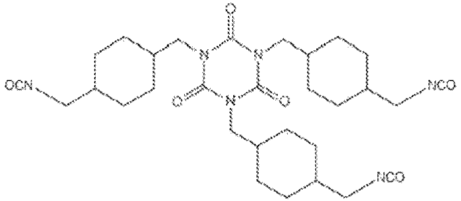

Les isocyanurates de diisocyanates sont également disponibles dans le commerce. Par exemple les isocyanurates de HDI, sont commercialisés par Bayer sous les dénominations DESMODUR^{®} N3300, N3600 et N3790BA, ou par VENCOREX sous les dénominations TOLONATE^{®} HDT, HDT-LV et HDT-LV2.

Les adduits de diisocyanate et triol peuvent être préparés à partir de diisocyanates qui sont de préférence choisis parmi les monomères de diisocyanates aromatiques ou aliphatiques, et leurs mélanges, et plus préférentiellement les monomères diisocyanates aliphatiques. Les monomères de diisocyanate peuvent être sous forme d'isomère pur ou sous forme de mélange d'isomères.

A titre de triols utilisables pour préparer les adduits de diisocyanate et triol, on peut citer par exemple le Glycérol, Triméthylolméthane (TMM), Triméthyloléthane (TME) et Triméthylolpropane (TMP). De préférence, on utilise le TMP.

A titre d'exemple d'adduits de diisocyanates et de triols utilisables selon l'invention, on peut citer l'adduit de méta-xylylène diisocyanate et de triméthylolpropane, tel que représenté ci-dessous. Cet adduit est commercialisé par exemple par la société MITSUI CHEMICALS sous la dénomination « TAKENATE^{®} D-110N » :

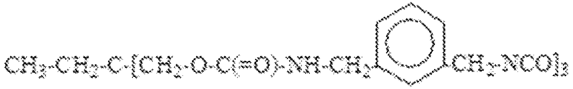

Les biurets utilisables selon l'invention sont des biurets monomériques, oligomériques ou polymériques d'hexaméthylène diisocyanate (HDI), d'isophorone diisocyanate (IPDI), de pentaméthylène diisocyanate (PDI), de méta-xylylène diisocyanate (m-XDI) ou de de méta-xylylène diisocyanate hydrogéné (m-HXDI).

On peut donner comme exemple de biuret de HDI, le produit de formule :

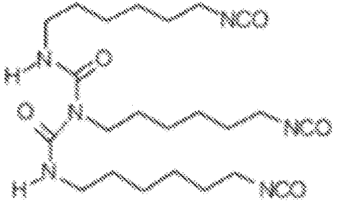

Les biurets de HDI sont par exemple commercialisés par BAYER sous les dénominations DESMODUR^{®} N100 et N3200, ou par VENCOREX sous les dénominations TOLONATE^{®} HDB et HDB-LV.

Selon une variante tout particulièrement préféré de l'invention, le triisocyanate compris dans le composant -NCO de la composition adhésive structurale PU2K est un biuret de l'hexaméthylène diisocyanate (HDI).

### Composant durcisseur :

Le composant durcisseur contient au moins une entité chimique porteuse d'un groupement réactif avec le groupement isocyanate -NCO, par exemple porteuse d'un groupement terminal hydroxyl ou amino ou un mélange de telles entités.

Selon un 1^{er} mode de réalisation, préféré, le composant durcisseur comprend un polyol ou un mélange de polyols.

Les polyols utilisables peuvent être choisis parmi ceux possédant une masse molaire ou une masse moléculaire moyenne en nombre (Mn) allant de 60 g/mol à 22 000 g/mol, de préférence de 600 g/mol à 18 000 g/mol, de préférence 1 000 g/mol à 12 000 g/mol, de préférence de 1 000 à 8 000 g/mol et encore plus préférentiellement de 1 000 g/mol à 4 000 g/mol.

La masse moléculaire moyenne en nombre des polyols peut être calculée à partir de l'indice d'hydroxyle (IOH) exprimé en mg KOH/g et de la fonctionnalité du polyol ou déterminée par des méthodes bien connues de l'homme du métier, par exemple par chromatographie d'exclusion stérique (ou SEC en anglais) avec étalon PEG (polyéthylène glycol).

Les polyols peuvent avoir une fonctionnalité hydroxyle allant de 2 à 6, de préférence 2 à 4, encore plus préférentiellement de 2 à 3. Dans le cadre de l'invention, et sauf mention contraire, la fonctionnalité hydroxyle d'un polyol est le nombre moyen de fonctions hydroxyle par mole de polyol.

Les polyols utilisables peuvent être choisis parmi les polyester polyols, les polyéther polyols, les polydiène polyols, les polycarbonate polyols, les poly(éther-carbonate) polyols, les pré-polymères à terminaisons -OH, et leurs mélanges.

Les polyols utilisables peuvent également être choisis parmi les polyols aliphatiques, les polyols arylaliphatiques, les polyols aromatiques, les polyols carbonates et les mélanges de ces composés.

Selon l'invention, les polyester polyols peuvent avoir une masse moléculaire moyenne en nombre allant de 500 g/mol à 22 000 g/mol, de préférence de 700 g/mol à 10 000 g/mol et encore plus préférentiellement de 900 à 6 000 g/mol.

Parmi les polyester polyols, on peut par exemple citer :
- les polyesters polyols d'origine naturelle telle que l'huile de ricin ;
- les polyesters polyols résultant de la condensation :
   - d'un ou plusieurs polyols aliphatiques (linéaires, ramifiés ou cycliques) ou aromatiques tels que par exemple l'éthanediol, le 1,2-propanediol, le 1,3-propanediol, le glycérol, le triméthylolpropane, le 1,6-hexanediol, le 1,2,6-hexanetriol, le butènediol, le cyclohexanediméthanol, le sucrose, le glucose, le sorbitol, le glycérol, le triméthylolpropane, le pentaérythritol, le mannitol, la triéthanolamine, la N-méthyldiéthanolamine, et leurs mélanges, avec
   - un ou plusieurs acide polycarboxylique ou son dérivé ester ou anhydride tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que par exemple l'anhydride maléique ou phtalique, ou une lactone telle que par exemple la caprolactone.

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 :
- le TONE^{®} 0240 (commercialisé par UNION CARBIDE) qui est une polycaprolactone de masse moléculaire moyenne en nombre d'environ 2000 g/mol, et un point de fusion de 50°C environ,
- le DYNACOLL^{®} 7381 (commercialisé par EVONIK) de masse moléculaire moyenne en nombre d'environ 3500 g/mol, et ayant un point de fusion de 65°C environ,
- le DYNACOLL^{®} 7360 (commercialisé par EVONIK) qui résulte de la condensation de l'acide adipique avec l'hexane diol, et a une masse moléculaire moyenne en nombre d'environ 3500 g/mol, et un point de fusion de 55°C environ,
- le DYNACOLL^{®} 7330 (commercialisé par EVONIK) de masse moléculaire moyenne en nombre d'environ 3500 g/mol, et ayant un point de fusion de 85°C environ,
- le DYNACOLL^{®} 7363 (commercialisé par EVONIK) qui résulte également de la condensation de l'acide adipique avec l'hexane diol, et a une masse moléculaire moyenne en nombre d'environ 5500 g/mol, et un point de fusion de 57°C environ,
- le DYNACOLL ^{®} 7250 (commercialisé par EVONIK) : polyester polyol ayant une viscosité de 180 Pa.s à 23°C, une masse moléculaire moyenne en nombre Mn égale à 5 500 g/mol, et une Tg égale à -50°C,
- le KURARAY ^{®} P-6010 (commercialisé par KURARAY) : polyester polyol ayant une viscosité de 68 Pa.s à 23°C, une masse moléculaire moyenne en nombre égale à 6 000 g/mol, et une Tg égale à -64°C,
- le KURARAY ^{®} P-10010 (commercialisé par KURARAY) : polyester polyol ayant une viscosité de 687 Pa.s à 23°C, et une masse moléculaire moyenne en nombre égale à 10 000 g/mol.

Selon un mode de réalisation préféré, le polyester polyol est choisie parmi une polycaprolactone ; l'huile de ricin ; un polyester polyol résultant de la condensation de l'éthylène glycol, du propylène glycol, du 1,3-propanediol et/ou du 1,6-hexanediol avec l'acide adipique et/ou les différents isomères de l'acide phtalique ; et leurs mélanges.

Selon un mode de réalisation préféré, le polyol (ou mélange de polyols) compris dans le composant durcisseur de la composition adhésive structurale PU2K selon l'invention est un polyéther polyol (ou un mélange de polyéthers polyols). Selon l'invention, les polyéther polyols peuvent avoir une masse moléculaire moyenne en nombre allant de 200 g/mol à 22 000 g/mol, de préférence de 600 g/mol à 18 000 g/mol, de préférence 1 000 g/mol à 12 000 g/mol, et encore plus préférentiellement de 1 000 à 4 000 g/mol.

De préférence, les polyéther polyols ont une fonctionnalité hydroxyle allant de 2 à 4, encore plus préférentiellement de 2 à 3.

Les polyéther polyols utilisables selon l'invention sont de préférence choisis parmi les polyoxyalkylène-polyol, dont la partie alkylène, linéaire ou ramifiée, comprend de 1 à 4 atomes de carbone, de préférence de 2 à 3 atomes de carbone.

Plus préférentiellement, les polyéther polyols utilisables selon l'invention sont choisis parmi les polyoxyalkylène diols ou polyoxyalkylène triols, et mieux encore des polyoxyalkylène diols, dont la partie alkylène, linéaire ou ramifiée, comprend de 1 à 4 atomes de carbone, de préférence de 2 à 3 atomes de carbone.

A titre d'exemple de polyoxyalkylène diols ou triols utilisables selon l'invention, on peut par exemple citer :
- les polyoxypropylène diol ou triol (aussi désignés par polypropylène glycols (PPG) diol ou triol) ayant une masse moléculaire moyenne en nombre allant de 400 g/mol à 22 000 g/mol et de préférence allant de 400 g/mol à 12 000 g/mol,
- les polyoxyéthylène diol ou triol (aussi désignés par polyéthylène glycols (PEG) diol ou triol) ayant une masse moléculaire moyenne en nombre allant de 400 g/mol à 22 000 g/mol et de préférence allant de 400 g/mol à 12 000 g/mol,
- les polyoxybutylène glycols (aussi désignés par polybutylène glycols (PBG) diol ou triol) ayant une masse moléculaire moyenne en nombre allant de 200 g/mol à 12 000 g/mol,
- les copolymères ou terpolymères de PPG/PEG/PBG diol ou triol ayant une masse moléculaire moyenne en nombre allant de 400 g/mol à 22 000 g/mol et de préférence allant de 400 g/mol à 12 000 g/mol,
- les polytétrahydrofurane (PolyTHF) diol ou triol ayant une masse moléculaire moyenne en nombre allant de 250 g/mol à 12 000 g/mol,
- les polytétraméthylène glycols (PTMG) ayant une masse moléculaire moyenne en nombre allant de 200 g/mol à 12 000 g/mol,
- et leurs mélanges.

De préférence, les polyéther polyols utilisables sont choisis parmi les polyoxypropylène diols ou triols. Les polyéther polyols mentionnés ci-dessus peuvent être préparés de manière conventionnelle, et sont largement disponibles dans le commerce. Ils peuvent par exemple être obtenus par polymérisation de l'oxyde d'alkylène correspondant en présence d'un catalyseur à base d'un double complexe métal-cyanure.

A titre d'exemples de polyéther diols, on peut citer les polyoxypropylène diols commercialisés sous la dénomination « ACCLAIM^{®} » par la société COVESTRO, tels que l' « ACCLAIM^{®} 18200 » de masse moléculaire moyenne en nombre voisine de 18 700 g/mol, l' « ACCLAIM^{®} 12200 » de masse moléculaire moyenne en nombre voisine de 11 335 g/mol, l'« ACCLAIM^{®} 8200 » de masse moléculaire moyenne en nombre voisine de 8 057 g/mol, et l'« ACCLAIM^{®} 4200 » de masse moléculaire moyenne en nombre voisine de 4 020 g/mol, ou encore le polyoxypropylène diol commercialisé sous la dénomination « VORANOL P2000 » par la société DOW de masse moléculaire moyenne en nombre voisine de 2 004 g/mol.

A titre d'exemples de polyéther triols, on peut citer le polyoxypropylène triol commercialisés sous la dénomination « VORANOL CP3355 » par la société DOW, de masse moléculaire moyenne en nombre voisine de 3 554 g/mol.

Les polydiène polyols utilisables selon l'invention peuvent être choisis de préférence parmi les polydiènes comportant des groupes hydroxyles terminaux, et leurs dérivés correspondants hydrogénés ou époxydés.

De préférence, les polydiène polyols utilisables selon l'invention sont choisis parmi les polybutadiènes comportant des groupes hydroxyles terminaux, éventuellement hydrogénés ou époxydés. Préférentiellement, les polydiène polyols utilisables selon l'invention sont choisis parmi les homopolymères et copolymères de butadiène comportant des groupes hydroxyles terminaux, éventuellement hydrogénés ou époxydés.

Dans le cadre de l'invention, et sauf mention contraire, on entend par « groupes hydroxyles terminaux » d'un polydiène polyol, les groupes hydroxyles situés aux extrémités de la chaîne principale du polydiène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémio sélective des doubles liaisons de la chaîne principale d'un polydiène comportant des groupes hydroxyles terminaux, et comportent donc au moins un groupe époxy dans sa chaîne principale.

A titre d'exemples de polybutadiène polyols, on peut citer les homopolymères de butadiène, saturé ou insaturé, comprenant des groupes hydroxyles terminaux, éventuellement époxydés, tels que par exemple ceux commercialisés sous la dénomination POLY BD^{®} ou KRASOL^{®} par la société CRAY VALLEY.

A titre d'exemple de polycarbonate diol, on peut citer le CONVERGE POLYOL 212-10 et CONVERGE POLYOL 212-20 commercialisés par la société NOVOMER respectivement de masse moléculaire en nombre (Mn) égales à 1000 et 2000 g/mol dont les indices hydroxyles sont respectivement de 112 et 56 mg KOH/g, le DESMOPHEN^{®} C XP 2716 commercialisé par COVESTRO de masse moléculaire en nombre (Mn) égale à 326 g/mol dont l'indice hydroxyle est de 344 mg KOH/g, les POLYOL C-590, C1090, C-2090 et C-3090 commercialisés par KURARAY ayant une masse moléculaire en nombre (Mn) allant de 500 à 3000 g/mol et un indice hydroxyle allant de 224 à 37 mg KOH/g.

Selon une variante tout particulièrement avantageuse de l'invention, qui est de préférence combinée avec celle précédemment décrite pour le composant -NCO, le composant durcisseur compris dans la composition adhésive structurale polyuréthane bicomposante (PU2K) comprend :
- au moins deux polyéthers polyols P1 ayant chacun une masse moléculaire moyenne en nombre strictement inférieure à 500 g/mol, lesdits polyéthers polyols P1 étant tels que :
   - au moins un polyéther polyol P1 comprend au moins trois fonctions hydroxyle, de préférence au moins quatre fonctions hydroxyle ; et
   - au moins un polyéther polyol P1 comprend au moins deux fonctions hydroxyle ; et
- au moins un polyéther polyol P2 ayant une masse moléculaire moyenne en nombre strictement supérieure à 1 000 g/mol.

### Polyéthers polyols P1 :

De préférence, le composant durcisseur comprend :
- au moins un polyéther polyol P1 comprenant au moins trois fonctions hydroxyle, de préférence au moins quatre fonctions hydroxyle ; et
- au moins un polyéther polyol P1 comprenant deux fonctions hydroxyle, de préférence comprenant au moins un radical arylène.

Selon un mode de réalisation, les polyéthers polyols P1 ont chacun une masse moléculaire moyenne en nombre allant de 100 g/mol à moins de 500 g/mol, de préférence de 200 g/mol à moins de 500 g/mol, préférentiellement de 300 à moins de 500 g/mol, avantageusement de 400 à moins de 500 g/mol, et encore plus avantageusement de 400 à 490 g/mol.

De préférence, les polyéthers polyols P1 ont chacun un indice hydroxyle (IOH) (moyen) allant de 224 à 2244 milligrammes de KOH par gramme de polyol (mg KOH/g), de préférence de 224 à 1122 mg KOH/g, préférentiellement de 224 à 748 mg KOH/g, encore plus préférentiellement de 229 à 561 mg KOH/g.

Parmi les polyéthers polyols P1, on peut par exemple citer le DlANOL^{®} 330 (4,4'-isopropylidènediphénol propoxylé ayant un IOH d'environ 280 mg KOH/g) commercialisé par CECA, ou le LUPRANOL^{®} 3402 (éthylène diamine propoxylée ayant une fonctionnalité de 4 et un IOH d'environ 470 mg KOH/g) commercialisé par BASF.

### Polyéthers polyols P2 :

Le composant durcisseur comprend au moins un polyéther polyol P2 ayant une masse moléculaire moyenne en nombre strictement supérieure à 1 000 g/mol, de préférence inférieure ou égale à 10 000 g/mol, préférentiellement inférieure ou égale à 5 000 g/mol, avantageusement inférieure ou égale à 3 000 g/mol.

Les polyéthers diols sont plus particulièrement préférés, et parmi eux les polyoxyalkylènes diols tels que les polyoxypropylène diols.

Comme exemples de tels produits commercialisés, on peut citer le polyoxypropylène diol commercialisé sous la dénomination « VORANOL^{®} P 1010 » par la société DOW de masse moléculaire moyenne en nombre (Mn) voisine de 1 020 g/mol et dont l'indice hydroxyle est d'environ 110 mg KOH/g, ou le « VORANOL^{®} P2000 » commercialisé par la société DOW de masse moléculaire moyenne en nombre voisine de 2 040 g/mol et dont l'indice hydroxyle est d'environ 55 mg KOH/g.

Selon un 2^{nd} mode de réalisation de l'invention, le composant durcisseur comprend un composé porteur de groupements terminaux amino, de préférence une polyamine ayant 2 ou plus de groupes amino par mole, de préférence une polyoxyalkylène polyamine (ou polyétheramine). De préférence, la polyoxyalkylène polyamine a de 2 à 4 groupes amino par mole, et plus préférentiellement de 2 à 3 groupes amino par mole. La polyoxyalkylène polyamine a généralement une masse molaire ou une masse moléculaire moyenne en nombre (Mn) d'environ 140 ou plus, et de préférence d'environ 200 ou plus. La polyoxyalkylène polyamine a de préférence une masse moléculaire moyenne en nombre (Mn) allant de 200 à 5 000 g/mol ou moins, de préférence de 200 à 4 000 g/mol et de préférence de 200 à 2 000 g/mol. Parmi les polyoxyalkylène polyamines préférées, on peut citer la polypropylène oxyde triamine JEFFAMINE^{®} T403 ayant une masse moléculaire moyenne en nombre (Mn) d'environ 440 g/mol, la polypropylène oxyde diamine JEFFAMINE^{®} D-400 ayant une masse moléculaire moyenne en nombre (Mn) d'environ 430 g/mol et la polypropylène oxyde diamine JEFFAMINE^{®} D-2000 ayant une masse moléculaire moyenne en nombre (Mn) d'environ 2 000 g/mol disponibles chez HUNTSMAN.

### Composition thixotrope (A) :

La composition adhésive structurale polyuréthane bicomposante (PU2K) selon l'invention est telle que son composant-NCO et son composant durcisseur comprennent chacun de 0,1 % à 40 % en poids, sur la base du poids total du composant correspondant, d'une composition thixotrope (A) qui comprend, sur la base de son poids total :
- de 1 à 40 % en poids d'une bis-urée (a) obtenue par réaction d'une amine aliphatique primaire (a1) avec un diisocyanate (a2) de masse molaire inférieure à 500 g/mole ; et
- de 60 à 99 % en poids d'un plastifiant (b) choisi parmi :
   - un alkylphtalate, de préférence le DiIsoDécylPhtalate (DIDP);
   - le tétravalérate de pentaérythritol ;
   - un ester d'acide alkylsulphonique et de phénol ;
   - le diisononyl-1,2-cyclohexane dicarboxylate ;
   - le 3,3'-[Methylenebis(oxymethylene)]bis[heptane] ; et
   - le dioctyl carbonate.

La composition thixotrope (A) est ainsi une suspension (ou dispersion) de particules solides de la bis-urée (a) dans une phase continue constituée par le plastifiant (b).

De préférence la composition thixotrope (A) est constituée de la bis-urée (a) et du plastifiant (b) dans les teneurs en poids indiquées précédemment.

La bis-urée (a) est obtenue par réaction d'une amine aliphatique primaire (a1) avec un diisocyanate (a2) de masse molaire inférieure à 500 g/mole.

L'amine choisie est de préférence une n-alkylamine comprenant de 1 à 22 atomes de carbone, et, de façon encore plus préférée, la n-butylamine.

Le diisocyanate (a2) utilisable peut être aromatique ou aliphatique, et a pour formule (II) :

NCO-R⁶-NCO (II)

dans laquelle R⁶ est choisi parmi l'un des radicaux divalents suivants dont les formules ci-dessous font apparaître les 2 valences libres :
- a) le radical divalent dérivé de l'isophorone : 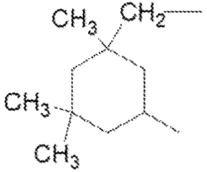
- b) le radical divalent 4,4'-méthylène-bis(cyclohexyle) 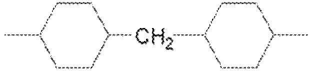
- c) le radical divalent dérivé du 2,4-diisocyanate de toluène (ou 2,4-TDI) ou du 2,6-diisocyanate de toluène (ou 2,6-TDI) de formules respectives: 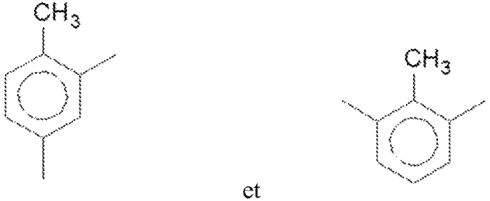
- d) le radical divalent dérivé du 4,2'-diisocyanate de diphénylméthylène (ou 4,2'-MDI) ou du 4,4'-diisocyanate de diphénylméthylène (ou 4,4'-MDI), de formules : 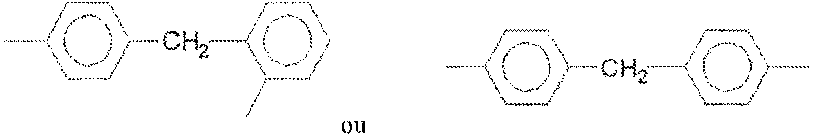
- e) -(CH₂)₆- (ou radical hexaméthylène) ;

f) 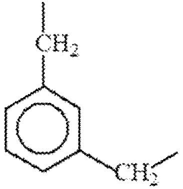 (ou radical m-xylylène)
g) 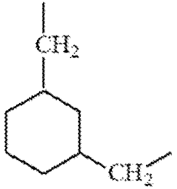 (ou radical hexahydro-m-xylylène)

Le 4,4'-diisocyanate de diphénylméthylène (ou 4,4'-MDI), répondant à l'une des formules d) ci-dessus est particulièrement préféré.

Le plastifiant (b) est choisi parmi des plastifiants connus de l'homme de l'art et qui sont, avantageusement, disponibles dans le commerce.

Parmi les alkylphtalates, on préfère utiliser le DiIsoDécylPhtalate (DIDP).

S'agissant du tétravalérate de pentaérythritol, on peut citer le produit commercialisé sous la marque Pevalen^{®} par la société Perstorp.

S'agissant d'un ester d'acide alkylsulphonique et de phénol, on peut citer le produit Mesamoll^{®}, commercialisé par la société Lanxess.

S'agissant du diisononyl-1,2-cyclohexane dicarboxylate, on peut citer le produit commercialisé sous le nom Hexamoll Dinch^{®} par la société BASF.

Le 3,3'-[Methylenebis(oxymethylene)]bis[heptane] peut être identifié par son numéro CAS : 22174-70-5 et est également connu sous le nom commercial de 2-ethylhexylal, disponible chez LAMBIOTTE.

Enfin, le dioctyl carbonate (European Chemical Number ou EC Number : 434-850-2) est disponible chez BASF.

Selon une variante tout particulièrement préférée, le plastifiant (b) est le DiIsoDécylPhtalate (DIDP).

Selon un autre mode de réalisation, la composition thixotrope (A) comprend, et de préférence est constituée par, de 10 à 30 % en poids de la bis-urée (a) et de 70 à 90 % en poids du plastifiant (b).

La composition thixotrope (A) mise en oeuvre dans la composition adhésive structurale PU2K selon l'invention peut être préparée de la manière suivante.

La réaction de l'amine aliphatique a1) avec le diisocyanate a2) est très exothermique. Pour éviter que la grande quantité de chaleur formée par la réaction n'entraîne la décomposition de la bis-urée formée, les composés a1) et a2) sont chacun dissous dans le plastifiant b), préalablement à leur mise en réaction, ledit plastifiant b) servant ainsi à évacuer la chaleur formée par la réaction. Les 2 solutions dans le plastifiant b) des composés a1) et a2) sont avantageusement introduites chacune dans un réacteur par des injecteurs, sous une pression de 40 à 200 bar, de préférence de 80 à 120 bar, les 2 solutions étant ainsi mises en contact à l'état de liquide pulvérisé. Les quantités de réactifs correspondent de préférence à un rapport (nombre de moles de a1) / (nombre de moles de a2) égal à environ 2. La bis-urée est produite par la réaction sous la forme de particules solides dispersées dans une phase continue de plastifiant b), la viscosité Brookfield de la suspension correspondante, mesurée à la température de 23 °C étant généralement comprise entre 1 et 50 Pa.s, de préférence entre 10 et 25 Pa.s.

Selon un mode de réalisation préféré, le composant -NCO et le composant durcisseur comprennent chacun de 0,5 à 35 % en poids de ladite composition thixotrope (A), sur la base du poids total du composant correspondant, et encore plus préférentiellement de 2 à 15 % en poids.

### Alumine (B) :

La composition adhésive structurale polyuréthane bicomposante (PU2K) selon l'invention est telle que au moins un composant, parmi son composant -NCO et son composant durcisseur, comprend de de 5 à 40 % en poids d'alumine (B), sur la base du poids total dudit composant, et de préférence

Selon une variante préférée, l'alumine (B) est comprise dans le composant durcisseur, plus préférentiellement à une teneur de de 10 à 35 % en poids, sur la base du poids total dudit composant.

L'alumine (B) mise en oeuvre est une alumine standard, qui se présente généralement sous une forme pulvérulente, dont les particules solides ont un diamètre qui peut varier de 0,2 µm à 50 µm, plus particulièrement de 0,5 µm à 25 µm, le diamètre médian D50 étant souvent compris entre 2 et 5 µm, par exemple voisin de 3 µm.

L'alumine (B) peut par exemple être obtenue commercialement auprès de Huber sous la dénomination Martoxid ^{™} 200.

### Autres ingrédients du composant -NCO et du composant durcisseur :

Les composants -NCO et durcisseur de la composition adhésive structurale PU2K selon l'invention peuvent chacun comprendre au moins un additif choisi dans le groupe constitué des solvants, des pigments, des microsphères, des promoteurs d'adhérence (comme par exemple des alcoxysilanes), des absorbeurs d'humidité, des stabilisants UV (ou antioxydants), des colorants, des charges, et de leurs mélanges.

Selon un mode de réalisation, les composants -NCO et durcisseur comprennent chacun au moins une charge choisie parmi les charges minérales, les charges organiques, et leurs mélanges.
A titre d'exemple de charges minérales utilisables, on peut utiliser n'importe quelles charges minérales habituellement utilisées dans le domaine des compositions adhésives. Ces charges se présentent typiquement sous la forme de particules de géométrie diverse. Elles peuvent être par exemples sphériques, fibreuses, ou présenter une forme irrégulière.

De préférence, la (ou les) charge est choisie dans le groupe constitué de l'argile, du quartz, des charges carbonatées, du kaolin, du gypse, des argiles, des zéolithes, des tamis moléculaires et de leurs mélanges. Préférentiellement la charge est choisie parmi les zéolithes et/ou charges carbonatées, telles que les carbonates de métaux alcalin ou alcalino-terreux, et plus préférentiellement le carbonate de calcium ou la craie. On peut citer à titre d'exemple de charge de carbonate de calcium le produit commercialisé par OMYA, sous la dénomination OMYA BSH, dont le taille moyenne de particules est de 2,4 µm. La Siliporite SA 1720, disponible auprès de ARKEMA est un exemple de zéolithe synthétique commerciale pouvant être également utilisé comme charge. Elle se présente sous la forme d'un tamis moléculaire 3 Angström de type A.

Ces charges peuvent être non traitée ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

A titre d'exemple de charges organiques utilisables, on peut utiliser n'importe quelles charges organiques et notamment polymériques habituellement utilisées dans le domaine des compositions adhésives.

On peut utiliser par exemple du polychlorure de vinyle (PVC), des polyoléfines, du caoutchouc, de l'éthylène vinyl acétate (EVA), des fibres aramides telles que le Kevlar^{®}.

On peut utiliser également des microsphères creuses en polymère thermoplastique expansibles ou non expansibles. On peut notamment citer des microsphères creuses en chlorure de vinylidène/acrylonitrile.

La taille moyenne de particule de charges utilisables est de préférence inférieure ou égale à 100 microns, préférentiellement inférieure ou égale à 30 microns, avantageusement inférieure ou égale à 10 microns.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

Chacun des composants -NCO et durcisseur peut comprendre une quantité totale en charge(s) allant de 1% à 40% en poids, préférentiellement de 1% à 30% en poids, par rapport au poids total du composant correspondant.

En outre, selon un mode de réalisation préféré, le composant durcisseur peut comprendre un catalyseur de réticulation. Le catalyseur de réticulation utilisable peut être tout catalyseur connu par l'homme du métier pour catalyser la formation de polyuréthane et/ou d'une polyurée par réaction d'au moins un polyisocyanate et d'au moins un polyol et/ou une polyamine.

On peut utiliser par exemple un ou plusieurs catalyseurs de réticulation choisis dans le groupe constitué :
- des catalyseurs organo-métalliques ;
- des amidines ;
- des amines tertiaires ; et
- de leurs mélanges.

Parmi les catalyseurs organo-métalliques sont préférés ceux ne comprenant pas d'étain. Les composés organo-métalliques (composés comprenant au moins une liaison covalente métal-carbone) peuvent comprendre les alcoolates métalliques, les carboxylates métalliques, et les complexes de coordination métalliques avec un(des) ligand(s) organique(s). L'atome métallique est de préférence choisi parmi l'aluminium, le zinc, le fer, le bismuth, le titane, l'or et le zirconium. Les catalyseurs organo-métalliques peuvent comprendre plusieurs atomes métalliques, tels que par exemple du bismuth et du zinc, comme le BORCHI^{®} KAT VP 0244 (mélange de néodécanoate de zinc et de néodécanoate de bismuth) de chez BORCHERS.

Parmi les amidines, on peut citer notamment :
- le 1,8-diazabicyclo[5.4.0]undec-7-ène (DBU) : 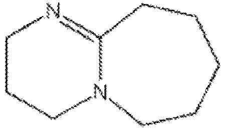
- le 1,5-diazabicyclo[4.3.0]non-5-ène (DBN) :

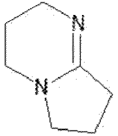

Parmi les amines tertiaires, on peut citer notamment :
- l'éther diéthylique-2,2'-morpholine (DMDEE) : 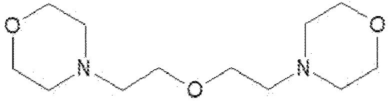
- le 1,4-diazabicyclo[2.2.2]octane (DABCO)

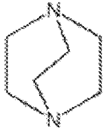

De préférence, la quantité de catalyseur de réticulation utilisable va de 0,01 à 1% en poids, de préférence encore de 0,05 à 0,5% en poids, par rapport au poids du composant durcisseur.

La composition adhésive structurale PU2K selon l'invention est avantageusement substantiellement exempte de solvant. On entend par ces termes que la teneur en solvant dudit adhésif ne dépasse pas 1 % poids/poids, et de préférence 0,05 %.

### Composition adhésive structurale PU2K :

Chacun des composants -NCO et durcisseur constitutifs de la composition adhésive structurale PU2K selon l'invention est préparé séparément, par simple mélange de ses ingrédients.

Le composant -NCO et le composant durcisseur sont conditionnés, par exemple dans une bicartouche. La distribution de la colle se fait à l'aide d'un pistolet pour bicartouche. Un mélange homogène des deux composants est obtenu en fixant à la bicartouche un mélangeur statique.

La composition adhésive est obtenue selon un procédé connu de l'homme du métier par réaction du composant -NCO avec le composant durcisseur dans un rapport NCO / (OH + NH) allant de environ 0,90 à 1,20, de préférence entre 1,00 et 1,10 de manière à ce que le rapport en volume des composants -NCO et durcisseur soit préférentiellement proche de 1. Le rapport NCO / OH + NH est défini comme étant le rapport des fonctions NCO (méq/g) du composant -NCO sur la somme des fonctions réactives OH (méq/g) et NH (méq/g) du composant durcisseur.

La présente invention a également pour objet l'utilisation de la composition adhésive structurale PU2K, telle que définie ci-dessus, comme adhésif structural dans le domaine de la construction, dans le domaine de la fabrication des moyens de transport, de préférence de l'industrie automobile, ferroviaire, et aérospatiale, et dans le domaine de la construction navale, plus particulièrement pour les assemblages destinés à la fabrication des batteries des voitures électriques ou des voitures hybrides.

La présente invention a enfin pour objet un procédé d'assemblage de deux substrats par collage, comprenant :
- l'enduction sur au moins un des deux substrats à assembler de la composition adhésive obtenue par mélange du composant -NCO et du composant durcisseur, tels que définis précédemment; puis
- la mise en contact effective des deux substrats.

Les substrats appropriés sont, par exemple, des substrats inorganiques tels que le béton, les métaux ou les alliages (comme les alliages d'aluminium, l'acier, les métaux non-ferreux et les métaux galvanisés) ; ou bien des substrats organiques comme le bois, des plastiques comme le PVC, le polycarbonate, le PMMA, le polyéthylène, le polypropylène, les polyesters, les résines époxy ; les substrats en métal et les composites revêtus de peinture (comme dans le domaine automobile par exemple).

L'invention est à présent décrite dans les exemples de réalisation suivants qui sont donnés à titre purement illustratif, et ne sauraient être interprétés pour en limiter la portée.

### EXEMPLES

Les ingrédients suivants ont été utilisés :
- TOLONATE^{®} HDB, commercialisé par la société VENCOREX, est un polyisocyanate sur base HDI de type biuret de fonctionnalité moyenne F = 3,7, ayant un pourcentage NCO allant de 22,5 à 24,5 % et une teneur en HDI résiduel < 0,1 %, et ayant une viscosité à 25°C allant de 1500 à 2500 mPa.s.
- VORANOL^{™} P 2000, commercialisé par la société DOW, est un Polypropylène Glycol (PPG) de fonctionnalité F = 2 ayant un IOH de 55 mg KOH/g soit une masse moléculaire moyenne en nombre (Mn) voisine de 2040 g/mol.
- DIANOL^{®} 330, commercialisé par la société CECA, est le 4,4'-Isopropylidènediphénol propoxylé (PPG) de fonctionnalité F = 2 ayant un IOH de 280 mg KOH/g soit une masse moléculaire moyenne en nombre (Mn) voisine de 401 g/mol.
- LUPRANOL^{®} 3402, commercialisé par la société BASF, est une éthylène diamine propoxylée de fonctionnalité F = 4 ayant un IOH de 470 mg KOH/g soit une masse moléculaire moyenne ne nombre (Mn) voisine de 480 g/mol.
- OMYA^{®} BSH, de la société OMYA, est un carbonate de calcium hydrophobe avec taille moyenne de particules de 2,4 µm
- SILIPORITE^{®} SA 1720 est une zéolithe synthétique commercialisée par la société CECA, sous la forme d'un tamis moléculaire 3 Angström de type A
- AEROSIL^{®} R202 commercialisé par la société EVONIK est une silice pyrogénée hydrophobe de surface spécifique (BET) voisine de 100 m2/g.
- BORCHI^{®} KAT VP 0244, catalyseur constitué d'un mélange de néodécanoate de zinc et de néodécanoate de bismuth, de chez BORCHERS.
- Martoxid ^{™} 200, alumine de chez Huber dont les particules solides ont un diamètre de 0,5 µm à 25 µm, et un diamètre médian D50 d'environ 3 µm.

### Exemple A1 (Référence) : Préparation du composant -NCO

Dans un réacteur maintenu sous agitation constante et sous azote, on mélange les ingrédients constituant le composant -NCO dans les proportions indiquées dans le Tableau 1.

Après homogénéisation du mélange, on mesure la teneur en groupe NCO dans le composant -NCO, (exprimée en pourcentage en poids par rapport au poids du composant - NCO (%NCO) ), selon la norme NF T52-132.

### Exemple A2 (Référence) : Préparation du composant -OH (durcisseur)

Dans un réacteur maintenu sous agitation constante et sous azote, on mélange les ingrédients constituant le composant -OH dans les proportions indiquées dans le Tableau 2.

Après homogénéisation du mélange (3 heures environ), on mesure la teneur en groupe OH dans le composant -OH, exprimée en milligramme de KOH par gramme de composant - OH (mg KOH/g).

### Exemple A3 (comparatif) : Préparation et évaluation d'une composition adhésive PU2K

### Préparation :

Le composant -NCO préparé à l'exemple A1 et le composant -OH préparé à l'exemple A2 ont été mélangés à raison d'un rapport équivalent molaire -NCO/-OH égal à 1 ce qui correspond à un rapport pondéral composant -NCO/composant -OH égal à 100 g de composant -NCO pour 95,6 g de composant -OH. Les proportions correspondantes sont indiquées dans le Tableau 3.

Le mélange est effectué via l'utilisation d'une bi-cartouche de 50 ml à une température de 23°C environ.

**[Tableau 1]**

| Composant -NCO | | |
|---|---|---|
| **Ingrédients** | Teneur (en % poids/poids) | |
| | **Exemple A1** | **Exemple 1** |
| TOLONATE^{®} HDB | 76,0 | 76,0 |
| SILIPORITE^{®} SA 1720 | 8,5 | 5 |
| AEROSIL^{®} R202 | 1,5 | - |
| Composition thixotrope de l'exemple A | - | 5 |
| OMYA^{®} BSH | 14,0 | 14,0 |
| Total | 100 | 100 |
| | | |
| Teneur pondérale en -NCO (en % poids/poids) | 16,72 | 16,72 |

**[Tableau 2]**

| Composant -OH (composant durcisseur) | | |
|---|---|---|
| **Ingrédients** | Teneur (en % poids/poids) | |
| | **Exemple A2** | **Exemple 2** |
| VORANOL^{™} P2000 | 15,00 | 15,00 |
| LUPRANOL^{®} 3402 | 38,74 | 38,74 |
| DIANOL^{®} 330 | 8,00 | 8,00 |
| SILIPORITE^{®} SA 1720 | 5,18 | 5,15 |
| AEROSIL^{®} R202 | 1,45 | - |
| Composition thixotrope de l'exemple A | - | 5,00 |
| OMYA^{®} BSH | 31,52 | - |
| Martoxid ^{™} 200 | - | 28,00 |
| BORCHI^{®} KAT VP 0244 | 0,11 | 0,11 |
| Total | 100 | 100 |
| | | |
| Teneur pondérale en -OH (en mg KOH/g) | 212,8 | 212,8 |

**[Tableau 3]**

| Compositions adhésives structurales polyuréthane bicomposant (PU2K) | | |
|---|---|---|
| **Composant** | **Exemple A3 (comparatif)** | **Exemple 3 (selon l'invention)** |
| Composant -NCO | Exemple A1 | Exemple 1 |
| Composant -OH | Exemple A2 | Exemple 2 |
| Rapport équivalent molaire -NCO/-OH | 1 | 0,97 |
| Rapport pondéral composant -NCO/composant -OH | 100/95,6 | 100/92,2 |
| | | |
| Ecoulement après extrusion (en g/minute) | 450 | 210 |
| Distance de fluage (en cm) selon ASTM D 2202 | 3 | 0 |
| Contrainte de traction à la rupture (MPa) | 25 | 23 |
| Allongement à la rupture (%) | 5 | 10 |
| Conductivité thermique (en W.m⁻¹.K⁻¹ | 0,5 | 0,8 |

### Evaluation :

La composition adhésive PU2K comparative A3 ainsi obtenue est soumises aux tests et mesures décrits ci-après.

### a) Ecoulement de la composition PU2K non réticulée après extrusion :

Le test mis en oeuvre a pour but d'apprécier l'aptitude à l'extrusion, au travers de la canule, de la composition de l'exemple A3 conditionnée en bicartouche, sous l'effet de la pression exercée par le piston qui est solidaire de la gâchette du pistolet actionnée par l'opérateur. La pression exercée est de 3 bar.

Le débit mesuré est indiqué en g/minute dans le Tableau 3 et correspond à un comportement tout à fait conforme.

### b) Fluage de la composition PU2K non réticulée :

Le fluage (ou sagging ou slump) de la composition visqueuse de l'exemple A3 est mesuré selon la norme ASTM D 2202. Pour cela, ladite composition est introduite dans la cavité du gabarit de mesure de la norme placé en position horizontale, puis le piston est avancé de manière à former un cylindre de composition de diamètre 38,1 mm et d'épaisseur 4,75 mm, prêt à s'écouler vers le bas, sous l'effet de la gravité, le long de la surface de l'instrument, qui est munie d'une échelle graduée. Le gabarit est ensuite placé immédiatement en position verticale durant 15 minutes à 23°C. A la fin de cette période de 15 minutes, une mesure est faite, à l'aide de l'échelle graduée, du point maximal de fluage du cylindre initial formé par la composition.

On observe un fluage important de la composition, correspondant à une distance mesurée sur l'échelle graduée de l'instrument de 3 cm, résultat qui est indiqué dans le Tableau 3.

### c) Performances mécaniques intrinsèques de la composition PU2K réticulée :

Les mesures de contrainte de traction à la rupture et d'allongement (élongation) en traction à la rupture ont été réalisées selon la norme ISO 37 (2012).

Le principe de la mesure consiste à étirer dans une machine de traction, dont la mâchoire mobile se déplace à une vitesse constante égale à 10 mm/minute, une éprouvette standard constituée de la composition de l'exemple A3 réticulée, et à enregistrer, au moment où se produit la rupture de l'éprouvette, la contrainte de traction appliquée (en MPa) ainsi que l'allongement (élongation) de l'éprouvette (en %). L'éprouvette standard est en forme d'haltère, comme illustré dans la norme internationale ISO 37. La partie étroite de l'haltère utilisée a pour longueur 20 mm, pour largeur 4 mm et pour épaisseur 3 à 4 mm.

Les résultats obtenus sont indiqués dans le Tableau 3 et correspondent à des valeurs bien représentatives d'un adhésif structural PU2K.

### d) Conductivité thermique de la composition PU2K réticulée :

La conductivité thermique est mesurée par un conductimètre à fil chaud, tel que le FP2C fabriqué par la société NEOTIM.

La sonde à fil chaud est placée en sandwich entre 2 éprouvettes de la composition de l'exemple A3 réticulée en forme de parallélépipède de dimensions 80 x 40 x 5 mm, et préalablement conditionnées durant 1 semaine à température ambiante.

La conductivité thermique mesurée est indiquée dans le Tableau 3 en W/mK

### Exemple A (Référence) : Composition thixotrope (A) constituée d'une suspension de 23,3 % poids/poids de bis-urée dans le DIDP

On prépare tout d'abord :
- une solution A de n-Butylamine dans le DIDP, constituée de 17,17 % poids/poids de n-Butylamine et de 82,83 % poids/poids de DIDP, puis
- une solution B de 4,4'-MDI dans le DIDP, constituée de 29,46 % poids/poids de 4,4'-MDI dans 70,34 % poids/poids de DIDP.

Les 2 solutions A et B sont chauffées à 100°C, puis introduites, chacune sous une pression de 100 bar, dans un réacteur, dans lequel elles sont pulvérisées en continu l'une sur l'autre dans un ratio A/B = 50,1 / 49,9 en poids, correspondant à un rapport molaire n-Butylamine/ MDI égal à 2. La réaction est immédiate et la température du réacteur atteint 140°C en fin de fabrication.

En sortie de réacteur, on obtient une dispersion stable de 23,3 % poids/poids dans le DIDP d'une bis-urée, de formule :

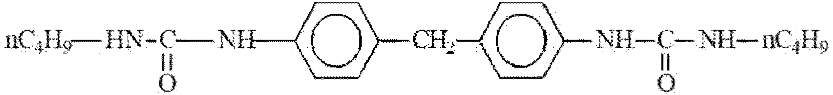

La viscosité Brookfield de la suspension mesurée à 23°C est de 15 Pa.s.

### Exemple 1 : Préparation du composant -NCO incorporant la composition thixotrope de l'exemple A :

On répète l'exemple A1 avec les ingrédients et leurs teneurs indiqués dans le Tableau 1.

### Exemple 2 : Préparation du composant durcisseur incorporant la composition thixotrope de l'exemple A :

On répète l'exemple A2 avec les ingrédients et leurs teneurs indiqués dans le Tableau 2.

### Exemple 3 (selon l'invention) : Préparation et évaluation d'une composition adhésive PU2K constituée du composant -NCO de l'exemple 1 et du composant durcisseur de l'exemple 2 :

On répète l'exemple A3 avec le composant -NCO de l'exemple 1 et le composant durcisseur de l'exemple 2 dans les proportions indiquées dans le Tableau 3.

Les résultats obtenus pour les tests sont indiqués également dans le Tableau 3 et font apparaître :
- un écoulement après extrusion certes inférieur à celui de l'exemple A3 mais néanmoins tout à fait acceptable ;
- une absence de fluage, contrairement à l'exemple A3 ;
- une contrainte de traction à la rupture et un allongement à la rupture semblables à celles obtenues pour la composition adhésive de l'exemple A3, qui correspondent donc également à des valeurs tout à fait représentatives d'un adhésif structural PU2K ; et
- une conductivité thermique très largement augmentée (de 60 %) par rapport à celle de l'exemple A3.

## Revendications

1. Composition adhésive structurale polyuréthane bicomposante (PU2K) constituée d'un composant -NCO, qui contient une ou plusieurs entités chimiques porteuses de groupements terminaux isocyanates, et d'un composant durcisseur, qui contient au moins une entité chimique porteuse d'un groupement réactif avec le groupement isocyanate -NCO, **caractérisée en ce que** :
- le composant -NCO et le composant durcisseur comprennent chacun de 0,1 % à 40 % en poids, sur la base du poids total du composant correspondant, d'une composition thixotrope (A) comprenant, sur la base de son poids total :
- de 1 à 40 % en poids d'une bis-urée (a) obtenue par réaction d'une amine aliphatique primaire (a1) avec un diisocyanate (a2) de masse molaire inférieure à 500 g/mole, et
- de 60 à 99 % en poids d'un plastifiant (b) choisi parmi :
- un alkylphtalate,
- le tétravalérate de pentaérythritol,
- un ester d'acide alkylsulphonique et de phénol,
- le diisononyl-1,2-cyclohexane dicarboxylate,
- le 3,3'-[Methylenebis(oxymethylene)]bis[heptane] ; et
- le dioctyl carbonate ;
ladite composition thixotrope (A) se présentant sous la forme d'une suspension de particules solides de la bis-urée (a) dans une phase continue constituée par le plastifiant (b) ; et
- au moins un composant, parmi le composant -NCO et le composant durcisseur, comprend de 5 à 40 % en poids d'alumine (B), sur la base du poids total dudit composant.

2. Composition adhésive structurale PU2K selon la revendication 1, **caractérisée en ce que** le composant -NCO comprend un polyisocyanate choisi parmi les diisocyanates, les triisocyanates, et leurs mélanges.

3. Composition adhésive structurale PU2K selon la revendication 2, **caractérisée en ce que** les triisocyanates sont choisis parmi les isocyanurates de diisocyanate, les adduits de diisocyanates et de triols, et les biurets.

4. Composition adhésive structurale PU2K selon la revendication 3, **caractérisée en ce que** le triisocyanate compris dans le composant -NCO est un biuret de l'hexaméthylène diisocyanate (HDI).

5. Composition adhésive structurale PU2K selon l'une des revendications 1 à 4, **caractérisée en ce que** le composant durcisseur comprend un polyol ou un mélange de polyols.

6. Composition adhésive structurale PU2K selon la revendication 5, **caractérisée en ce que** le polyol est un polyéther polyol, dont la fonctionnalité hydroxyle va de 2 à 4.

7. Composition adhésive structurale PU2K selon la revendication 6, **caractérisée en ce que** le composant durcisseur comprend :
- au moins deux polyéthers polyols P1 ayant chacun une masse moléculaire moyenne en nombre strictement inférieure à 500 g/mol, lesdits polyéthers polyols P1 étant tels que :
- au moins un polyéther polyol P1 comprend au moins trois fonctions hydroxyle, de préférence au moins quatre fonctions hydroxyle ; et
- au moins un polyéther polyol P1 comprend au moins deux fonctions hydroxyle ; et
- au moins un polyéther polyol P2 ayant une masse moléculaire moyenne en nombre strictement supérieure à 1 000 g/mol.

8. Composition adhésive structurale PU2K selon l'une des revendications 1 à 7, **caractérisée en ce que** la composition thixotrope (A) est telle que la bis-urée
(a) est obtenue par réaction d'une n-alkylamine (a1) comprenant de 1 à 22 atomes de carbone, avec un diisocyanate (a2) de formule (II) :
NCO-R⁶-NCO (II)
dans laquelle R⁶ est choisi parmi l'un des radicaux divalents suivants dont les formules ci-dessous font apparaître les 2 valences libres :
- a) le radical divalent dérivé de l'isophorone : 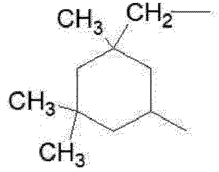
- b) le radical divalent 4,4'-méthylène-bis(cyclohexyle) 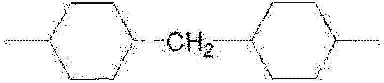
- c) le radical divalent dérivé du 2,4-diisocyanate de toluène (ou 2,4-TDI) ou du 2,6-diisocyanate de toluène (ou 2,6-TDI) de fomules respectives : 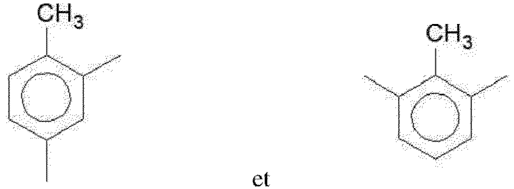
- d) le radical divalent dérivé du 4,2'-diisocyanate de diphénylméthylène (ou 4,2'-MDI) ou du 4,4'-diisocyanate de diphénylméthylène (ou 4,4'-MDI), de formules : 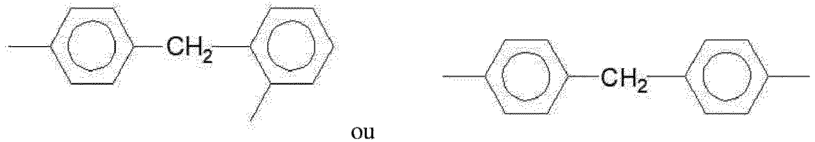
- e) -(CH₂)₆- (ou radical hexaméthylène) ;
f) 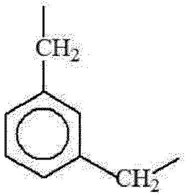 (ou radical m-xylylène) 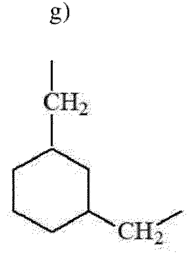 (ou radical hexahydro-m-xylylène)

9. Composition adhésive structurale PU2K selon l'une des revendications 1 à 8, **caractérisée en ce que** la composition thixotrope (A) est telle que le plastifiant (b) est le DiIsoDécylPhtalate.

10. Composition adhésive structurale PU2K selon l'une des revendications 1 à 9, **caractérisée en ce que** la composition thixotrope (A) comprend, et de préférence est constituée par, de 10 à 30 % en poids de la bis-urée (a) et de 70 à 90 % en poids du plastifiant (b).

11. Composition adhésive structurale PU2K selon l'une des revendications 1 à 10, **caractérisée en ce que** le composant -NCO et le composant durcisseur comprennent chacun de 0,5 à 35 % en poids de la composition thixotrope (A), sur la base du poids total du composant correspondant, et encore plus préférentiellement de 2 à 15 % en poids.

12. Composition adhésive structurale PU2K selon l'une des revendications 1 à 11, **caractérisée en ce que** l'alumine (B) est comprise dans le composant durcisseur, plus préférentiellement à une teneur de de 10 à 35 % en poids, sur la base du poids total dudit composant.

13. Composition adhésive structurale PU2K selon l'une des revendications 1 à 12, **caractérisée en ce que** les composants -NCO et durcisseur comprennent chacun au moins une charge choisie parmi les charges minérales, les charges organiques, et leurs mélanges.

14. Utilisation de la composition adhésive structurale PU2K, telle que définie dans l'une des revendications 1 à 13, comme adhésif structural dans le domaine de la construction, dans le domaine de la fabrication des moyens de transport, de préférence de l'industrie automobile, ferroviaire et aérospatiale, et dans le domaine de la construction navale.

15. Procédé d'assemblage de deux substrats par collage, comprenant :
- l'enduction sur au moins un des deux substrats à assembler de la composition adhésive obtenue par mélange du composant -NCO et du composant durcisseur, tels que définis dans l'une des revendications 1 à 13 ; puis
- la mise en contact effective des deux substrats.

## Patentansprüche

1. Zweikomponenten-Polyurethan- (PU2K-)Konstruktionsklebstoff-Zusammensetzung, die aus einer -NCO-Komponente, die eine oder mehrere terminale Isocyanatgruppen tragende chemische Einheiten enthält, und einer Härterkomponente besteht, die mindestens eine chemische Einheit enthält, die eine gegenüber der Isocyanatgruppe, -NCO, reaktive Gruppe trägt, **dadurch gekennzeichnet, dass**:
- die -NCO-Komponente und die Härterkomponente jeweils 0,1 Gew.-% bis 40 Gew.-%, bezogen auf das Gesamtgewicht der entsprechenden Komponente, eine thixotrope Zusammensetzung (A) umfassen, die, bezogen auf ihr Gesamtgewicht, Folgendes umfasst:
- 1 bis 40 Gew.-% eines Bisharnstoffs (a), der durch eine Umsetzung eines primären aliphatischen Amins (a1) mit einem Diisocyanat (a2) mit einer Molmasse von weniger als 500 g/mol erhalten wird, und
- 60 bis 99 Gew.-% eines Weichmachers (b), der ausgewählt ist aus:
- einem Alkylphthalat,
- Pentaerythrittetravalerat,
- einem Ester von Alkylsulfonsäure und Phenol,
- Diisononyl-1,2-cyclohexandicarboxylat,
- 3,3'-[Methylenbis(oxymethylen)]bis[heptan] und
- Dioctylcarbonat; wobei die thixotrope Zusammensetzung (A) in Form einer Suspension von festen Partikeln aus Bisharnstoff (a) in einer kontinuierlichen Phase vorliegt, die aus dem Weichmacher (b) besteht; und
- mindestens eine Komponente von der -NCO-Komponente und der Härterkomponente 5 bis 40 Gew.-% Aluminiumoxid (B) umfasst, bezogen auf das Gesamtgewicht der Komponente.

2. PU2K-Konstruktionsklebstoff-Zusammensetzung nach Anspruch 1, **dadurch gekennzeichnet, dass** die -NCO-Komponente ein Polyisocyanat umfasst, das aus Diisocyanaten, Triisocyanaten und Mischungen davon ausgewählt ist.

3. PU2K-Konstruktionsklebstoff-Zusammensetzung nach Anspruch 2, **dadurch gekennzeichnet, dass** die Triisocyanate aus Diisocyanatisocyanuraten, Addukten von Diisocyanaten und Triolen und Biurets ausgewählt sind.

4. PU2K-Konstruktionsklebstoff-Zusammensetzung nach Anspruch 3, **dadurch gekennzeichnet, dass** es sich bei dem in der -NCO-Komponente enthaltenen Triisocyanat um ein Biuret von Hexamethylendiisocyanat (HDI) handelt.

5. PU2K-Konstruktionsklebstoff-Zusammensetzung nach einem der Ansprüche 1 bis 4, **dadurch gekennzeichnet, dass** die Härterkomponente ein Polyol oder eine Mischung von Polyolen umfasst.

6. PU2K-Konstruktionsklebstoff-Zusammensetzung nach Anspruch 5, **dadurch gekennzeichnet, dass** es sich beim Polyol um ein Polyetherpolyol handelt, dessen Hydroxylfunktionalität von 2 bis 4 beträgt.

7. PU2K-Konstruktionsklebstoff-Zusammensetzung nach Anspruch 6, **dadurch gekennzeichnet, dass** die Härterkomponente Folgendes umfasst:
- mindestens zwei Polyetherpolyole P1, die jeweils ein Zahlenmittel der Molmasse von strikt weniger als 500 g/mol aufweisen, wobei die Polyetherpolyole P1 so beschaffen sind, dass:
- mindestens ein Polyetherpolyol P1 mindestens drei Hydroxylfunktionen, vorzugsweise mindestens vier Hydroxylfunktionen, umfasst und
- mindestens ein Polyetherpolyol P1 mindestens zwei Hydroxylfunktionen umfasst und
- mindestens ein Polyetherpolyol P2 ein Zahlenmittel der Molmasse von strikt mehr als 1000 g/mol aufweist.

8. PU2K-Konstruktionsklebstoff-Zusammensetzung nach einem der Ansprüche 1 bis 7, **dadurch gekennzeichnet, dass** die thixotrope Zusammensetzung (A) so beschaffen ist, dass der Bisharnstoff (a) durch eine Umsetzung eines 1 bis 22 Kohlenstoffatome umfassenden n-Alkylamins (a1) mit einem Diisocyanat (a2) der Formel (II) erhalten wird:
NCO-R⁶-NCO (II) ;
wobei R⁶ aus einem der folgenden zweiwertigen Reste ausgewählt ist, aus deren nachstehenden Formeln die 2 freien Valenzen hervorgehen:
- a) dem zweiwertigen Rest, der von Isophoron abgeleitet ist: 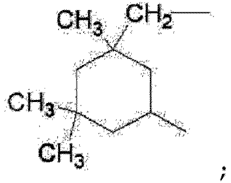
- b) dem zweiwertigen Rest 4,4'-Methylenbis(cyclohexyl) 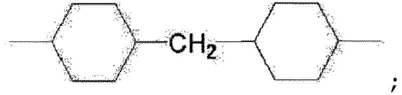
- c) dem zweiwertigen Rest, der von Toluol-2,4-diisocyanat (oder 2,4-TDI) oder Toluol-2,6-diisocyanat (oder 2,6-TDI) mit den jeweiligen Formeln: 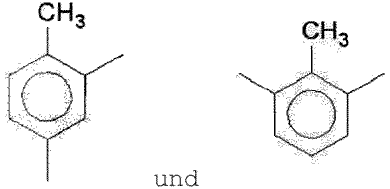 abgeleitet ist;
- d) dem zweiwertigen Rest, der von Diphenylmethylen-4,2'-diisocyanat (oder 4,2'-MDI) oder Diphenylmethylen-4,4'-diisocyanat (oder 4,4'-MDI) mit den Formeln: 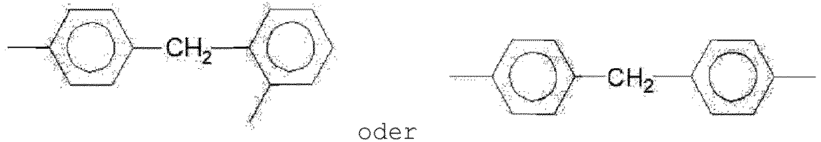 abgeleitet ist;
- e) -(CH₂)₆- (oder Hexamethylenrest);
- f) 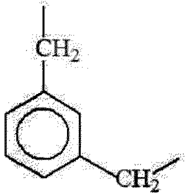 (oder m-Xylylenrest);
- g) 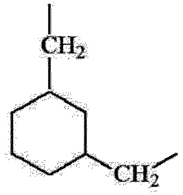 (oder Hexahydro-m-xylylenrest) .

9. PU2K-Konstruktionsklebstoff-Zusammensetzung nach einem der Ansprüche 1 bis 8, **dadurch gekennzeichnet, dass** die thixotrope Zusammensetzung (A) so beschaffen ist, dass es sich beim Weichmacher (b) um Diisodecylphthalat handelt.

10. PU2K-Konstruktionsklebstoff-Zusammensetzung nach einem der Ansprüche 1 bis 9, **dadurch gekennzeichnet, dass** die thixotrope Zusammensetzung (A) 10 bis 30 Gew.-% Bisharnstoff (a) und 70 bis 90 Gew.-% Weichmacher (b) umfasst und vorzugsweise daraus besteht.

11. PU2K-Konstruktionsklebstoff-Zusammensetzung nach einem der Ansprüche 1 bis 10, **dadurch gekennzeichnet, dass** die -NCO-Komponente und die Härterkomponente jeweils 0,5 bis 35 Gew.-% und noch stärker bevorzugt 2 bis 15 Gew.-% der thixotropen Zusammensetzung (A) umfassen, bezogen auf das Gesamtgewicht der jeweiligen Komponente.

12. PU2K-Konstruktionsklebstoff-Zusammensetzung nach einem der Ansprüche 1 bis 11, **dadurch gekennzeichnet, dass** Aluminiumoxid (B), stärker bevorzugt mit einem Gehalt von 10 bis 35 Gew.-%, bezogen auf das Gesamtgewicht der Komponente, in der Härterkomponente enthalten ist.

13. PU2K-Konstruktionsklebstoff-Zusammensetzung nach einem der Ansprüche 1 bis 12, **dadurch gekennzeichnet, dass** die -NCO- und die Härterkomponente jeweils mindestens einen Füllstoff umfassen, der aus mineralischen Füllstoffen, organischen Füllstoffen und Mischungen davon ausgewählt ist.

14. Verwendung der PU2K-Konstruktionsklebstoff-Zusammensetzung gemäß der Definition in einem der Ansprüche 1 bis 13 als Konstruktionsklebstoff im Bauwesen, auf dem Gebiet der Herstellung von Transportmitteln, vorzugsweise in der Automobil-, Bahn- und Luft- und Raumfahrtindustrie und auf dem Gebiet des Schiffbaus.

15. Verfahren zum Verbinden von zwei Substraten durch Kleben, das Folgendes umfasst:
- das Auftragen der Klebstoffkomponente, die durch Vermischen der -NCO-Komponente und der Härterkomponente wie denjenigen erhalten wird, die in einem der Ansprüche 1 bis 13 definiert sind, auf mindestens eines der zwei zu verklebenden Substrate; dann
- das wirksame In-Kontakt-Bringen der beiden Substrate.

## Claims

1. Two-component polyurethane structural adhesive composition (PU2K) consisting of an -NCO component, which contains one or more chemical entities carrying isocyanate end groups, and of a hardener component, which contains at least one chemical entity carrying a group which reacts with the isocyanate -NCO group, **characterized in that**:
- the -NCO component and the hardener component each comprise from 0.1% to 40% by weight, based on the total weight of the corresponding component, of a thixotropic composition (A) comprising, based on its total weight:
- from 1% to 40% by weight of a bis-urea (a) obtained by reaction of a primary aliphatic amine (a1) with a diisocyanate (a2) with a molar mass of less than 500 g/mol, and
- from 60% to 99% by weight of a plasticizer (b) chosen from:
- an alkyl phthalate,
- pentaerythritol tetravalerate,
- an ester of alkylsulfonic acid and of phenol,
- diisononyl 1,2-cyclohexanedicarboxylate,
- 3,3'-[methylenebis(oxymethylene)]bis[heptane], and
- dioctyl carbonate;
said thixotropic composition (A) being provided in the form of a suspension of solid particles of the bis-urea (a) in a continuous phase consisting of the plasticizer (b); and
- at least one component, among the -NCO component and the hardener component, comprises from 5% to 40% by weight of alumina (B), based on the total weight of said component.

2. PU2K structural adhesive composition according to Claim 1, **characterized in that** the -NCO component comprises a polyisocyanate chosen from diisocyanates, triisocyanates and their mixtures.

3. PU2K structural adhesive composition according to Claim 2, **characterized in that** the triisocyanates are chosen from diisocyanate isocyanurates, adducts of diisocyanates and of triols, and biurets.

4. PU2K structural adhesive composition according to Claim 3, **characterized in that** the triisocyanate included in the -NCO component is a hexamethylene diisocyanate (HDI) biuret.

5. PU2K structural adhesive composition according to one of Claims 1 to 4, **characterized in that** the hardener component comprises a polyol or a mixture of polyols.

6. PU2K structural adhesive composition according to Claim 5, **characterized in that** the polyol is a polyether polyol, the hydroxyl functionality of which ranges from 2 to 4.

7. PU2K structural adhesive composition according to Claim 6, **characterized in that** the hardener component comprises:
- at least two polyether polyols P1 each having a number-average molecular weight strictly of less than 500 g/mol, said polyether polyols P1 being such that:
- at least one polyether polyol P1 comprises at least three hydroxyl functions, preferably at least four hydroxyl functions; and
- at least one polyether polyol P1 comprises at least two hydroxyl functions; and
- at least one polyether polyol P2 having a number-average molecular weight strictly of greater than 1000 g/mol.

8. PU2K structural adhesive composition according to one of Claims 1 to 7, **characterized in that** the thixotropic composition (A) is such that the bis-urea (a) is obtained by reaction of an n-alkylamine (a1) comprising from 1 to 22 carbon atoms with a diisocyanate (a2) of formula (II):
NCO-R⁶-NCO (II)
in which R⁶ is chosen from one of the following divalent radicals, the formulae of which below show the two free valencies:
- a) the divalent radical derived from isophorone; 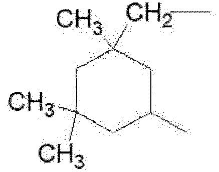
- b) the divalent radical 4,4'-methylenebis(cyclohexyl) ; 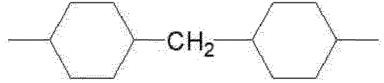
- c) the divalent radical derived from toluene-2,4-diisocyanate (or 2,4-TDI) or from toluene-2,6-diisocyanate (or 2,6-TDI) of respective formulae: 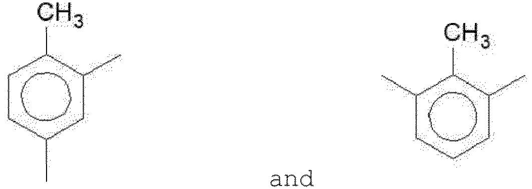
- d) the divalent radical derived from diphenylmethylene-4,2'-diisocyanate (or 4,2'-MDI) or from diphenylmethylene-4,4'-diisocyanate (or 4,4'-MDI), of formulae: 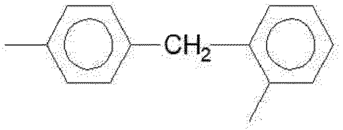 or 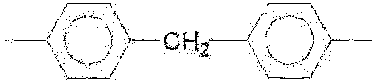
- e)
-(CH₂)₆- (or hexamethylene radical);
- f) 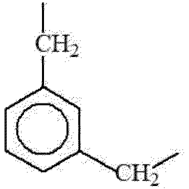 (or m-xylylene radical);
- g) 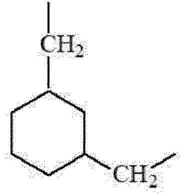 (or hexahydro-m-xylylene radical).

9. PU2K structural adhesive composition according to one of Claims 1 to 8, **characterized in that** the thixotropic composition (A) is such that the plasticizer (b) is DiIsoDecyl Phthalate.

10. PU2K structural adhesive composition according to one of Claims 1 to 9, **characterized in that** the thixotropic composition (A) comprises, and preferably consists of, from 10% to 30% by weight of the bis-urea (a) and from 70% to 90% by weight of the plasticizer (b).

11. PU2K structural adhesive composition according to one of Claims 1 to 10, **characterized in that** the -NCO component and the hardener component each comprise from 0.5% to 35% by weight of the thixotropic composition (A), based on the total weight of the corresponding component, and more preferentially still from 2% to 15% by weight.

12. PU2K structural adhesive composition according to one of Claims 1 to 11, **characterized in that** the alumina (B) is included in the hardener component, more preferably at a content of from 10% to 35% by weight, based on the total weight of said component.

13. PU2K structural adhesive composition according to one of Claims 1 to 12, **characterized in that** the -NCO and hardener components each comprise at least one filler chosen from mineral fillers, organic fillers and their mixtures.

14. Use of the PU2K structural adhesive composition, as defined in one of Claims 1 to 13, as structural adhesive in the field of construction, in the field of the manufacture of transportation means, preferably of the motor vehicle, rail and aerospace industries, and in the field of shipbuilding.

15. Process for assembling two substrates by adhesive bonding, comprising:
- the coating, onto at least one of the two substrates to be assembled, of the adhesive composition obtained by mixing the -NCO component and the hardener component, as are defined in one of Claims 1 to 13; then
- bringing the two substrates into actual contact.
